(19) Europäisches Patentamt
European Patent Office
Office européen des brevets

(11) **EP 3 474 463 A1**

(12) **EUROPEAN PATENT APPLICATION**
published in accordance with Art. 153(4) EPC

(43) Date of publication:
**24.04.2019 Bulletin 2019/17**

(51) Int Cl.:
***H04B 10/077*** *(2013.01)*

(21) Application number: **17812592.8**

(22) Date of filing: **05.06.2017**

(86) International application number:
**PCT/CN2017/087174**

(87) International publication number:
**WO 2017/215481 (21.12.2017 Gazette 2017/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **17.06.2016 CN 201610437116**

(71) Applicant: **ZTE Corporation**
**Shenzhen, Guangdong 518057 (CN)**

(72) Inventors:
• **CAO, Rixiang**
**Shenzhen**
**Guangdong 518057 (CN)**

• **NA, Ting**
**Shenzhen**
**Guangdong 518057 (CN)**
• **CHEN, Lei**
**Shenzhen**
**Guangdong 518057 (CN)**
• **KUANG, Guohua**
**Shenzhen**
**Guangdong 518057 (CN)**
• **HUANG, Xingang**
**Shenzhen**
**Guangdong 518057 (CN)**

(74) Representative: **Petit, Maxime et al**
**Ipsilon**
**Le Centralis**
**63, avenue du Général Leclerc**
**92340 Bourg-la-Reine (FR)**

(54) **OPTICAL POWER DETECTION METHOD, APPARATUS AND DEVICE, AND OPTICAL MODULE**

(57) Provided are an optical power detection method, apparatus, device, and optical module. The method includes: outputting a reference optical signal; applying a multiplexed signal of the optical signal to be detected and the reference optical signal to a photodiode of an optical module in the passive optical network; obtaining, from an output terminal of a transimpedance amplifier electrically connected to the photodiode in the passive optical network, a voltage signal converted from the multiplexed signal; performing peak-to-peak value detection on the voltage signal to obtain a peak-to-peak value of the reference optical signal and a peak-to-peak value of the optical signal to be detected; and obtaining a first power value of an optical power of the optical signal to be detected according to a ratio of the peak-to-peak value of the optical signal to be detected to the peak-to-peak value of the reference optical signal. In the solution of the present disclosure, the ratio of the peak-to-peak value of the optical signal to be detected to the peak-to-peak value of the reference optical signal does not change with the parameter drift of some electronic components in the passive optical network, solving a technical problem of low accuracy of optical power detection due to parameter drift of some electronic components in the passive optical network.

**FIG. 2**

# Description

## TECHNICAL FIELD

The present disclosure relates to the field of communications technology, and more particular, to an optical power detection method, apparatus, device, and optical module.

## BACKGROUND

With the development of network technology, a large amount of voice, data, video and other services can be transmitted by using networks. Therefore, the requirement for bandwidth is continuously improved, and a Passive Optical Network (PON) is generated under such a demand.

The PON system generally consists of an Optical Line Terminal (OLT) on a central office side, an Optical Network Unit (ONU) on a user side and an Optical Distribution Network (ODN), and generally employs a point-to-multipoint network structure. The ODN consists of passive optical components such as single-mode fiber, optical splitters and optical connectors, and provides an optical transmission medium for a physical connection between the OLT and the ONU. Currently, the PON transmission rate has been evolved, at the beginning, from 1G bit/s, such as Gigabit Passive Optical Network (GPON), Ethernet Passive Optical Network (EPON), to 10G bit/s, such as 10Gbit Passive Optical Network (XG PON) and 10GEPON, and further to 40G bit/s, such as Time Division Wavelength Division Multiplexing Passive Optical Network (TWDM PON), and continues to evolve towards 100G bit/s.

Optical module in the PON network generally includes a laser emitting unit and a laser receiving unit. The laser receiving unit typically includes a photodiode for converting a received laser signal into an electrical signal, and an electrical signal amplifying unit for processing the electrical signal into a digital signal with a standard swing and outputting the signal. Typically, it is necessary to detect a power of an optical signal received by the laser receiving unit, in order to diagnose and manage the PON network.

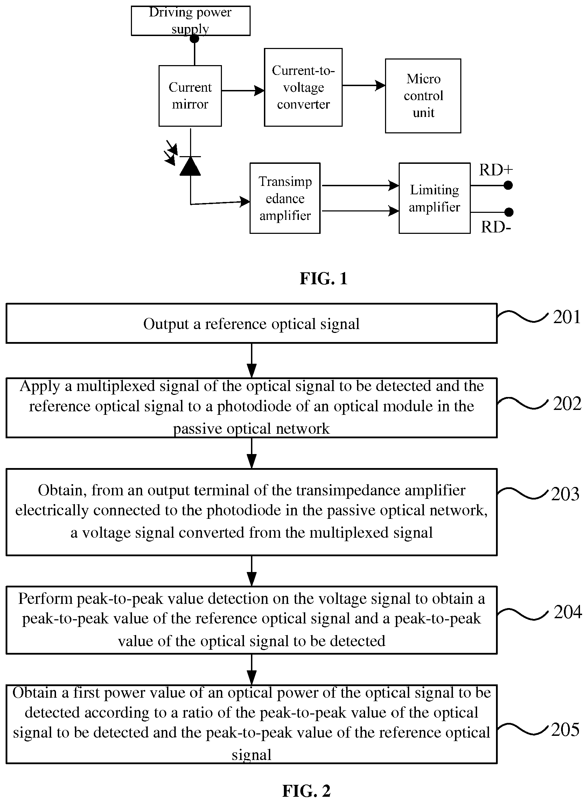

A schematic diagram of an optical power detection circuit in an existing optical module is shown in FIG. 1. A photodiode in the optical module (generally an avalanche photodiode (APD) or PIN photodiode) converts an optical signal into a current signal. The generated current signal passes through a transimpedance amplifier (TIA) and a limiting amplifier (LA), and is output as a digital signal with a differential standard swing. At the same time, a mirror current of the current signal is obtained through a current mirror circuit. The mirror current is converted to a voltage by amplification of a current-to-voltage (I-V) converter, and transmitted to a micro control unit (MCU) for sampling. Then, power value of the received optical signal may be obtained by calculation.

However, actual work shows that accuracy of optical power detection in this manner is not high since APD, APD driving voltage, and electronic components in the circuit will drift with temperature and time, and is difficult to meet requirements of optical network management. For example, for a TWDM PON system, the ITU-T G.989.2 standard requires a dynamic range of uplink optical power of up to 20 dB. Such a power imbalance is a challenge for the receiver, and the power imbalance also introduces a problem of multi-channel crosstalk due to wavelength division multiplexing. Therefore, typically, the TWDM PON system requires some additional means to reduce the power imbalance of the entire system, which puts higher requirements on the accuracy of optical power detection.

A traditional detection method can generally achieve a detection accuracy of about +/- 3dB, while a detection accuracy of +/- 0.5dB may generally be required to solve the problem of power imbalance of the system, which is difficult for the traditional method. Therefore, the existing optical power detection technology has a problem of low optical power detection accuracy, and is difficult to meet the requirement of optical network management which is developing rapidly.

## SUMMARY

In order to overcome the above problems in existing art, embodiments of the present disclosure provide an optical power detection method, apparatus, device, and optical module for solving a technical problem of low accuracy of optical power detection due to parameter drift of some electronic components in the passive optical network.

In order to solve the above technical problem, the present disclosure provides the following technical solutions.

According to an aspect of an embodiment of the present disclosure, an optical power detection method which may be applied to a passive optical network is provided, the method includes steps of: outputting a reference optical signal, wherein an amplitude modulation frequency of the reference optical signal is smaller than an amplitude modulation frequency of an optical signal to be detected, and a wavelength of the reference optical signal is different from a wavelength of the optical signal to be detected; applying a multiplexed signal of the optical signal to be detected and the reference optical signal to a photodiode of an optical module in the passive optical network; obtaining, from an output terminal of a transimpedance amplifier electrically connected to the photodiode in the passive optical network, a voltage signal converted from the multiplexed signal; performing peak-to-peak value detection on the voltage signal to obtain a peak-to-peak value of the reference optical signal and a peak-to-peak value of the optical signal to be detected; and obtaining a first power value of an optical power of the optical signal to be detected according to a ratio of the peak-to-peak value of the optical signal to be detected to the peak-to-peak value of the reference optical signal.

In an embodiment of the present disclosure, the passive optical network further includes a current mirror, and an input of the current mirror is electrically connected to the photodiode. After the step of obtaining the first power value of the optical power of the optical signal to be detected according to the ratio of the peak-to-peak value of the optical signal to be detected to the peak-to-peak value of the reference optical signal, the method further includes: obtaining a signal value of a current mirror signal outputted from an output terminal of the current mirror; obtaining a second power value of the optical power of the optical signal to be detected according to the signal value of the current mirror signal; determining whether the second power value is outside a preset range; determining the second power value as the optical power of the optical signal to be detected if the second power value is outside the preset range; and determining the first power value as the optical power of the optical signal to be detected if the second power value is within the preset range.

In an embodiment of the present disclosure, the step of obtaining the first power value of the optical power of the optical signal to be detected according to the ratio of the peak-to-peak value of the optical signal to be detected to the peak-to-peak value of the reference optical signal includes: substituting the ratio of the peak-to-peak value of the optical signal to be detected to the peak-to-peak value of the reference optical signal into a first predetermined function $P=m*V+n$ to obtain the first power value, wherein P indicates the optical power of the optical signal to be detected, V indicates the ratio of the peak-to-peak value of the optical signal to be detected to the peak-to-peak value of the reference optical signal, and m and n are constants.

In an embodiment of the present disclosure, the step of obtaining the second power value of the optical power of the optical signal to be detected according to the signal value of the current mirror signal includes: substituting the signal value of the current mirror signal into a second predetermined function $P=k*Ipd+b$ to obtain the second power value, wherein P indicates the optical power of the optical signal to be detected, Ipd indicates the signal value of the current mirror signal, and k and b are constants.

According to another aspect of an embodiment of the present disclosure, an optical power detection device which may be applied to a passive optical network is further provided, the device includes: an outputting module configured to output a reference optical signal, wherein an amplitude modulation frequency of the reference optical signal is smaller than an amplitude modulation frequency of an optical signal to be detected, and a wavelength of the reference optical signal is different from a wavelength of the optical signal to be detected; a multiplexing module configured to apply a multiplexed signal of the optical signal to be detected and the reference optical signal to a photodiode of an optical module in the passive optical network; a first obtaining module configured to obtain, from an output terminal of a transimpedance amplifier electrically connected to the photodiode in the passive optical network, a voltage signal converted from the multiplexed signal; a detecting module configured to perform peak-to-peak value detection on the voltage signal to obtain a peak-to-peak value of the reference optical signal and a peak-to-peak value of the optical signal to be detected; and a first calculating module configured to obtain a first power value of an optical power of the optical signal to be detected according to a ratio of the peak-to-peak value of the optical signal to be detected to the peak-to-peak value of the reference optical signal.

In an embodiment of the present disclosure, the passive optical network further includes a current mirror, and an input terminal of the current mirror is electrically connected to the photodiode; the device further includes: a second obtaining module configured to obtain a signal value of a current mirror signal outputted from an output terminal of the current mirror; a second calculating module configured to obtain a second power value of the optical power of the optical signal to be detected according to the signal value of the current mirror signal; a determining module configured to determine whether the second power value is outside a preset range; a first determining module configured to determine the second power value as the optical power of the optical signal to be detected if the second power value is outside the preset range; and a second determining module configured to determine the first power value as the optical power of the optical signal to be detected if the second power value is within the preset range.

In an embodiment of the present disclosure, the first computing module is configured to: substitute the ratio of the peak-to-peak value of the optical signal to be detected to the peak-to-peak value of the reference optical signal into a first predetermined function $P=m*V+n$ to obtain the first power value, wherein P indicates the optical power of the optical signal to be detected, V indicates the ratio of the peak-to-peak value of the optical signal to be detected to the peak-to-peak value of the reference optical signal, and m and n are constants.

In an embodiment of the present disclosure, the second calculating module is further configured to: substitute the signal value of the current mirror signal into a second predetermined function $P=k*Ipd+b$ to obtain the second power value, wherein P indicates the optical power of the optical signal to be detected, Ipd indicates the signal value of the current mirror signal, and k and b are constants.

According to another aspect of an embodiment of the present disclosure, an optical power detection apparatus which may be applied to a passive optical network is further provided, the apparatus includes: a laser device configured to output a reference optical signal, wherein an amplitude modulation frequency of the reference optical signal is smaller than an amplitude modulation frequency of an optical signal to be detected, and a wavelength of the reference optical signal is different from a wavelength of the optical signal to be detected; a multiplexer, which includes: a first signal output terminal, a first signal receive terminal configured to receive the optical signal to be detected, and a second signal receive terminal configured to receive the reference optical signal, wherein a multiplexed signal of the optical signal to be detected and the reference optical signal outputted from the first signal output terminal is applied to a photodiode of an optical module in the passive optical network; a signal peak-to-peak value detection circuit configured to detect a peak-to-peak value of the optical signal to be detected and a peak-to-peak value of the reference optical signal, wherein an input terminal of the signal peak-to-peak value detection circuit is electrically connected to an output terminal of a transimpedance amplifier of the optical module; and a processor configured to determine an optical power of the optical signal to be detected according to the peak-to-peak value of the optical signal to be detected and the peak-to-peak value of the reference optical signal, wherein the processor is electrically connected to an output terminal of the signal peak-to-peak value detection circuit.

According to another aspect of an embodiment of the present disclosure, the optical power detection apparatus further includes: a current mirror, wherein an input terminal of the current mirror is electrically connected to the photodiode, and an output terminal of the current mirror is electrically connected to the processor.

According to another aspect of an embodiment of the present disclosure, the signal peak-to-peak value detection circuit includes a first detection circuit configured to detect the peak-to-peak value of the optical signal to be detected and a second detection circuit configured to detect the peak-to-peak value of the reference optical signal, wherein an input terminal of the first detection circuit is electrically connected to the output terminal of the transimpedance amplifier, and an input terminal of the second detection circuit is electrically connected to the first detection circuit, an output terminal of the first detection circuit and an output terminal of the second detection circuit are both electrically connected to the processor.

According to another aspect of an embodiment of the present disclosure, the first detection circuit includes: a first upper envelope peak detection circuit, a first lower envelope peak detection circuit, a first follower, a second follower and a first subtractor, wherein the first subtractor includes a first input terminal, a second input terminal, and a second signal output terminal; wherein an input terminal of the first upper envelope peak detection circuit is electrically connected to the output terminal of the transimpedance amplifier, an output terminal of the first upper envelope peak detection circuit is electrically connected to an input terminal of the first follower, and an output terminal of the first follower is electrically connected to the first input terminal; an input terminal of the first lower envelope peak detection circuit is electrically connected to the output terminal of the transimpedance amplifier, an output terminal of the first lower envelope peak detection circuit is electrically connected to an input terminal of the second follower, and an output terminal of the second follower is connected to the second input terminal; and the second signal output terminal is electrically connected to the processor.

According to another aspect of an embodiment of the present disclosure, the second detection circuit includes: a second upper envelope peak detection circuit, a second lower envelope peak detection circuit, a third follower, a fourth follower and a second subtractor, wherein the second subtractor includes a third input terminal, a fourth input terminal, and a third signal output terminal; wherein an input terminal of the second upper envelope peak detection circuit is electrically connected to the output terminal of the first upper envelope peak detection circuit, an output terminal of the second upper envelope peak detection circuit is electrically connected to an input terminal of the third follower, and an output terminal of the third follower is electrically connected to the third input terminal; an input terminal of the second lower envelope peak detection circuit is electrically connected to the output terminal of the first upper envelope peak detection circuit, an output terminal of the second lower envelope peak detection circuit is electrically connected to an input terminal of the fourth follower, and an output terminal of the fourth follower is electrically connected to the fourth input terminal; and the third signal output terminal is electrically connected to the processor.

According to another aspect of an embodiment of the present disclosure, an optical module including the optical power detection apparatus described above is further provided.

In an embodiment of the present disclosure, the optical module further includes: a first lens, a second lens, a third lens, and a first broadband filter; wherein the optical signal to be detected is collected by the first lens, reflected by the first broadband filter and then enters the multiplexer; the reference optical signal is focused by the second lens, and then enters the multiplexer; and a multiplexed signal obtained by multiplexing the optical signal to be detected and the reference optical signal in the multiplexer is focused by the third lens and then applied to the photodiode.

In an embodiment of the present disclosure, the optical module further includes: a fourth lens, a fifth lens, and a sixth lens; wherein the optical signal to be detected is collected by the fourth lens, and then enters the multiplexer; the reference optical signal is focused by the fifth lens, and then enters the multiplexer; and a multiplexed signal obtained by multiplexing the optical signal to be detected and the reference optical signal in the multiplexer is focused by the sixth lens and then applied to the photodiode.

The beneficial effects of the embodiments of the present disclosure are described as below.

In embodiments of the present disclosure, a low-frequency amplitude-modulated reference optical signal is multiplexed with the optical signal to be detected, and applied to a same photodiode and other related electronic components in the passive optical network, and then, peak-to-peak value detection is performed on a voltage signal converted from the multiplexed signal to obtain the peak-to-peak value of the optical signal to be detected and the peak-to-peak value of the reference optical signal, afterwards, the optical power of the optical signal to be detected is obtained according to a ratio of the peak-to-peak value of the optical signal to be detected to the peak-to-peak value of the reference optical signal.

The optical signal to be detected and the reference optical signal pass through the same photodiode and other related electronic components in the passive optical network, thus the ratio of the peak-to-peak value of the optical signal to be detected to the peak-to-peak value of the reference optical signal does not change with the parameter drift of these electronic components in the passive optical network, solving a technical problem of low accuracy of optical power detection due to parameter drift of some electronic components in the passive optical network.

**BRIEF DESCRIPTION OF THE DRAWINGS**

FIG. 1 is a schematic diagram illustrating a circuit connection of conventional optical power detection;
FIG. 2 is a flow chart illustrating an optical power detection method of a first embodiment of the present disclosure;
FIG. 3 is a diagram illustrating a function image of a first preset function in the first embodiment of the present disclosure;
FIG. 4 is a diagram illustrating a function image of a second preset function in the first embodiment of the present disclosure;
FIG. 5 is a block diagram illustrating a structure of an optical power detection apparatus according to a second embodiment of the present disclosure;
FIG. 6 is another block diagram illustrating the structure of the optical power detection apparatus according to the second embodiment of the present disclosure;
FIG. 7 is a circuit connection diagram illustrating an optical power detection apparatus, when detecting optical power, according to a third embodiment of the present disclosure;
FIG. 8 is another circuit connection diagram illustrating the optical power detection apparatus, when detecting optical power, according to the third embodiment of the present disclosure;
FIG. 9 is yet another circuit connection diagram illustrating the optical power detection apparatus, when detecting optical power, according to the third embodiment of the present disclosure;
FIG. 10 is a circuit schematic diagram of an optical module according to a fourth embodiment of the present disclosure;
FIG. 11 is a schematic structural diagram illustrating an optical portion of the optical module according to the fourth embodiment of the present disclosure; and
FIG. 12 is another schematic structural diagram illustrating the optical portion of the optical module according to the fourth embodiment of the present disclosure.

**DETAILED DESCRIPTION**

Exemplary embodiments of the present disclosure will be described in more detail below with reference to accompanying drawings. Though exemplary embodiments of the present disclosure shown in the drawings, it should be understood that the present disclosure can be implemented in various forms, and is not limited to the embodiments described herein. Rather, these embodiments are provided for fully understanding of the disclosure, and for conveying the entire scope of the disclosure to those skilled in the art.

First embodiment

According to an aspect of an embodiment of the present disclosure, an optical power detection method, applied to a passive optical network, is provided. As shown in FIG. 2, the method includes steps 201-205.

At step 201, output a reference optical signal.

The amplitude modulation frequency of the reference optical signal is smaller than the amplitude modulation frequency of the optical signal to be detected, and the wavelength of the reference optical signal is different from the wavelength of the optical signal to be detected. In addition, the optical signal to be detected refers to an actual high-speed optical signal transmitted by an optical communication system, for example, for a TWDM PON system, the signal transmission rate is 10 Gbps. The reference optical signal refers to a low-speed optical signal emitted by a laser device, and the amplitude modulation frequency of the reference optical signal is much smaller than the amplitude modulation frequency of the optical signal to be detected, for example, the amplitude modulation frequency of the reference optical signal is 1 MHz. Compared with the amplitude modulation frequency of 10 Gbps of the optical signal to be detected, the amplitude modulation frequency of the reference optical signal is much smaller, so that it is easy to separate the reference optical signal in frequency domain by using certain filtering means.

At step 202, apply a multiplexed signal of the optical signal to be detected and the reference optical signal to a photodiode of an optical module in the passive optical network.

The optical signal to be detected and the reference optical signal pass through the same photodiode and other related electronic components in the passive optical network, thus the ratio of the peak-to-peak value of the optical signal to be detected to the peak-to-peak value of the reference optical signal does not change with the parameter drift of these electronic components. In addition, the ratio of the peak-to-peak value of the optical signal to be detected to the peak-to-peak value of the reference optical signal has a certain functional relationship with the optical power of the optical signal to be detected, thus in a case where the ratio of the peak-to-peak value of the optical signal to be detected to the peak-to-peak value of the reference optical signal does not change with the parameter drift of electronic components, the optical power of the optical signal to be detected determined according to the ratio of the peak-to-peak value of the optical signal to be detected to the peak-to-peak value of the reference optical signal does not change with the parameter drift of electronic components, thereby improving the detection accuracy of optical power in the passive optical network.

At step 203, obtain, from an output terminal of a transimpedance amplifier electrically connected to the photodiode in the passive optical network, a voltage signal converted from the multiplexed signal.

Optical module in the passive optical network includes a photodiode, a TIA, and an LA, wherein the photodiode is electrically connected to an input terminal of the TIA, and an output terminal of the TIA is electrically connected to an input terminal of the LA. The photodiode can convert an optical signal into a current signal, and the TIA can convert the current signal generated by the photodiode into a voltage signal. Therefore, after the multiplexed signal of the optical signal to be detected and the reference optical signal is applied to the photodiode, a voltage signal can be obtained from the output terminal of the TIA, and the voltage signal is converted from the multiplexed signal.

At step 204, perform peak-to-peak value detection on the voltage signal to obtain a peak-to-peak value of the reference optical signal and a peak-to-peak value of the optical signal to be detected.

The voltage signal is converted from the multiplexed signal of the optical signal to be detected and the reference optical signal, thus the voltage signal includes a component of the optical signal to be detected and a component of the reference optical signal. Therefore, when peak-to-peak value detection is performed on the voltage signal, the peak-to-peak value of the optical signal to be detected and the peak-to-peak value of the reference optical signal can be obtained.

At step 205, obtain a first power value of an optical power of the optical signal to be detected according to a ratio of the peak-to-peak value of the optical signal to be detected to the peak-to-peak value of the reference optical signal.

Illustratively, the step 205 includes a step of:

substituting the ratio of the peak-to-peak value of the optical signal to be detected to the peak-to-peak value of the reference optical signal into a first predetermined function P=m*V+n to obtain the first power value, wherein P indicates the optical power of the optical signal to be detected, V indicates the ratio of the peak-to-peak value of the optical signal to be detected to the peak-to-peak value of the reference optical signal, and m and n are constants.

For a certain optical signal, its optical power has a linear relationship with the peak-to-peak value of the signal. Assuming that the peak-to-peak value of the reference optical signal is B, the extinction ratio is r0, and the optical power is P0, they generally satisfy a linear relationship of P0*(1-r0)=k*B, wherein k is a constant.

Similarly, for the optical signal to be detected, assuming that the peak-to-peak value is A, the extinction ratio is r1, and the optical power is P, they generally satisfy a linear relationship of P*(1-r1)=k*A, wherein k is a constant.

Therefore, the following formula can be obtained from P0*(1-r0)=k*B and P*(1-r1)=k*A:

$$P = P0 * \frac{1-r0}{1-r1} * \frac{A}{B}$$

wherein, the reference optical signal is a known signal, in other words, the optical power and extinction ratio of the reference optical signal are constants that have been known, then P0*(1-r0) is also a constant. In this case, the following formula can be get if a=P0*(1-r0):

$$P = \frac{a}{1-r1} * \frac{A}{B}$$

On the other hand, for a standard optical transmission system, the range of the extinction ratio of the optical signal is relatively small. For example, for a 10 Gbps system, the extinction ratio of the optical module is generally between 8 dB and 10 dB, so the range of 1-r1 may be only 0.05, which can be ignored. Thus, the extinction ratio of the optical signal to be detected can be satisfied by setting an intermediate value at the beginning. Therefore, r1 is a known constant, and a/(1-r1) is a constant, in this case, if m=a/(1-r1), then P=m*A/B, that is, the relationship between A/B and P is actually an approximate linear relationship, that is, if A/B=V, then P=m*V.

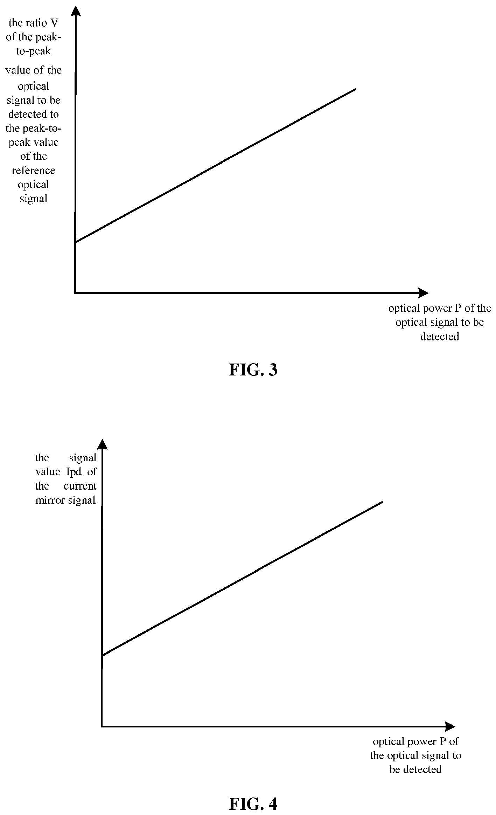

However, P=m*V is an ideal situation. Because of errors in electronic devices during general signal acquisition, the functional relationship between P and V is actually: P=m*V+n, wherein m and n are constants, as shown in Figure 3. In addition, the constants m and n can be obtained by scaling. For example, the values of m and n can be obtained by measuring values of the optical power P and V for multiple sets of optical signals to be detected (i.e., the ratio of the peak-to-peak value of the optical signal to be detected to the peak-to-peak value of the reference optical signal) to fit a curve as shown in Fig. 3.

It can be seen that, the optical power of the optical signal to be detected is determined by the ratio A/B of the peak-to-peak value A of the optical signal to be detected to the peak-to-peak value B of the reference optical signal, and since the optical signal to be detected and the reference optical signal pass through the same photodiode and other related electronic components in the passive optical network, the signal peak-to-peak ratio A/B does not change with the parameter drift of these electronic components. Therefore, the optical power detection by using the A/B value removes influence of parameter drift of the device, and the detection accuracy is greatly improved compared with a conventional current mirror detection method.

The highest accuracy of detection occurs when the value of A/B is A/B=1, that is, when the optical power of the reference optical signal is equivalent to the optical power of the optical signal to be detected, the detection can done with zero error. As the optical power of the photometric signal deviates from the optical power of the reference optical signal, the detection accuracy is slightly lowered. Therefore, an optical signal with an optical power equivalent to the optical power of the optical signal to be detected is generally selected as the reference optical signal. For example, for uplink optical power balance of the TWDM PON system, the detection accuracy of a certain optical power being high may be enough, and an optical power equivalent to the optical power may be selected as the optical power of the reference optical signal.

In another aspect of embodiments of the present disclosure, in order to make the detection accuracy of the finally obtained optical power higher, further detection may be made in combination with a current mirror. The passive optical network, to which the optical power detection method of the embodiments of the present disclosure is applied, may further include a current mirror, and an input terminal of the current mirror is electrically connected to the photodiode. Correspondingly, after the step 205, the method further includes steps of: obtaining a signal value of a current mirror signal outputted from an output terminal of the current mirror; obtaining a second power value of the optical power of the optical signal to be detected according to the signal value of the current mirror signal; determining whether the second power value is outside a preset range; determining the second power value as the optical power of the optical signal to be detected if the second power value is outside the preset range; and determining the first power value as the optical power of the optical signal to be detected if the second power value is within the preset range.

The step of obtaining the second power value of the optical power of the optical signal to be detected according to the signal value of the current mirror signal includes steps of: substituting the signal value of the current mirror signal into a second predetermined function P=k*Ipd+b to obtain the second power value, wherein P indicates the optical power of the optical signal to be detected, Ipd indicates the signal value of the current mirror signal, and k and b are constants.

As shown in FIG. 4, there is a linear relationship between the signal value Ipd of the current mirror signal and the optical power P of the optical signal to be detected, that is, P=k*Ipd+b, wherein k and b are constants, which can be obtained by scaling. For example, the values of k and b can be obtained by measuring values of the optical power P and Ipd for multiple sets of optical signals to be detected to fit a curve as shown in Fig. 4. The relationship between the signal value of the input current mirror signal and the optical power of the optical signal to be detected is stored in a corresponding memory. The optical power P of the optical signal to be detected can be obtained according to the relationship P=k*Ipd+b, by sampling signal values of directly or indirectly detected current mirror signals, such as, voltage amplitude values of current of the current mirror converted by an I-V converter.

The preset range indicates an interval of the optical power of the optical signal to be detected, that is, the optical power is greater than a first threshold and less than a second threshold. When the optical power is within the threshold-range, the optical power calculated by the ratio A/B of the peak-to-peak value of signals has high accuracy. Otherwise, when the optical power is outside the threshold-range, the optical power calculated by current mirror detection has high accuracy. Therefore, whether the second power value is within a preset range may be determined. When the second power value is within the preset range, the first power value detected through the value of A/B is selected as the optical power of the optical signal to be detected, and when the second power value is outside the preset range, the second power value detected through the current mirror is selected as the optical power value of the optical signal to be detected, thereby an optimal value for optical power detection can always be obtained.

Second embodiment

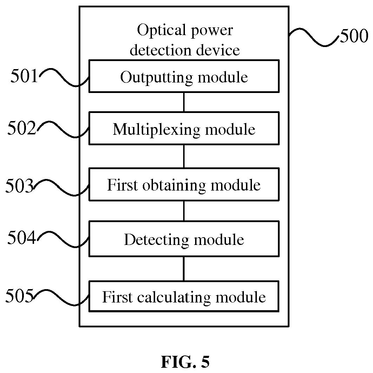

An embodiment of the present disclosure provides an optical power detection device applied to a passive optical network. As shown in FIG. 5, the device includes: an outputting module 501, a multiplexing module 502, a first obtaining module 503, a detecting module 504, and a first calculating module 505.

The outputting module 501 is configured to output a reference optical signal, wherein an amplitude modulation frequency of the reference optical signal is smaller than an amplitude modulation frequency of an optical signal to be detected, and a wavelength of the reference optical signal is different from a wavelength of the optical signal to be detected.

The multiplexing module 502 is configured to apply a multiplexed signal of the optical signal to be detected and the reference optical signal to a photodiode of an optical module in the passive optical network.

The first obtaining module 503 is configured to obtain, from an output terminal of a transimpedance amplifier electrically connected to the photodiode in the passive optical network, a voltage signal converted from the multiplexed signal.

The detecting module 504 is configured to perform peak-to-peak value detection on the voltage signal to obtain a peak-to-peak value of the reference optical signal and a peak-to-peak value of the optical signal to be detected.

The first calculating module 505 is configured to obtain a first power value of an optical power of the optical signal to be detected according to a ratio of the peak-to-peak value of the optical signal to be detected to the peak-to-peak value of the reference optical signal.

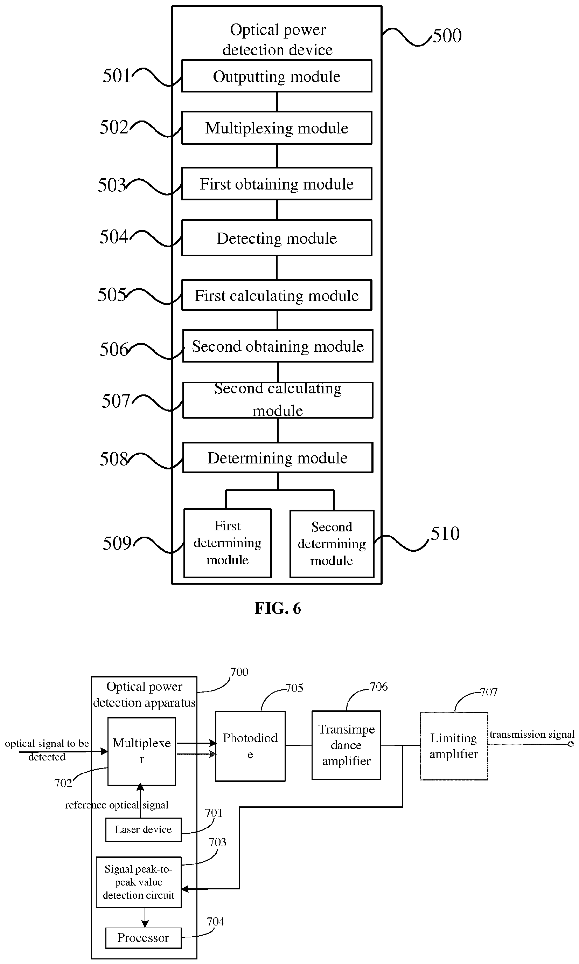

In an embodiment, the passive optical network further includes a current mirror, and an input terminal of the current mirror is electrically connected to the photodiode. As shown in FIG. 6, the device further includes: a second obtaining module 506, a second calculating module 507, a determining module 508, a first determining module 509, and a second determining module 510.

The second obtaining module 506 is configured to obtain a signal value of a current mirror signal outputted from an output terminal of the current mirror.

The second calculating module 507 is configured to obtain a second power value of the optical power of the optical signal to be detected according to the signal value of the current mirror signal.

The determining module 508 is configured to determine whether the second power value is outside a preset range.

The first determining module 509 is configured to determine the second power value as the optical power of the optical signal to be detected if the second power value is outside the preset range.

The second determining module 510 is configured to determine the first power value as the optical power of the optical signal to be detected if the second power value is within the preset range.

In an embodiment, the first calculating module 505 may be configured to: substitute the ratio of the peak-to-peak value of the optical signal to be detected to the peak-to-peak value of the reference optical signal into a first predetermined function $P=m*V+n$ to obtain the first power value, wherein P indicates the optical power of the optical signal to be detected, V indicates the ratio of the peak-to-peak value of the optical signal to be detected to the peak-to-peak value of the reference optical signal, and m and n are constants.

In an embodiment, the second calculating module 507 may be configured to: substitute the signal value of the current mirror signal into a second predetermined function $P=k*Ipd+b$ to obtain the second power value, wherein P indicates the optical power of the optical signal to be detected, Ipd indicates the signal value of the current mirror signal, and k and b are constants.

Third embodiment

An embodiment of the present disclosure provides an optical power detection apparatus applied to a passive optical network. As shown in FIG. 7, the optical power detection apparatus 700 includes: a laser device 701, a multiplexer 702, a signal peak-to-peak value detection circuit 703, and a processor 704.

The laser device 701 is configured to output a reference optical signal.

The multiplexer 702 includes a first signal output terminal, a first signal receive terminal configured to receive the optical signal to be detected, and a second signal receive terminal configured to receive the reference optical signal, wherein a multiplexed signal of the optical signal to be detected and the reference optical signal outputted from the first signal output terminal is applied to a photodiode 705 of an optical module in the passive optical network.

The signal peak-to-peak value detection circuit 703 is configured to detect a peak-to-peak value of the optical signal to be detected and a peak-to-peak value of the reference optical signal, and an input terminal of the signal peak-to-peak value detection circuit 703 is electrically connected to an output terminal of a transimpedance amplifier 706 of the optical module.

The processor 704 is configured to determine an optical power of the optical signal to be detected according to the peak-to-peak value of the optical signal to be detected and the peak-to-peak value of the reference optical signal, and the processor 704 is electrically connected to an output terminal of the signal peak-to-peak value detection circuit 703.

The laser device 701 may generate the reference optical signal. An amplitude modulation frequency of the reference optical signal is smaller than an amplitude modulation frequency of an optical signal to be detected, and a wavelength of the reference optical signal is different from a wavelength of the optical signal to be detected.

The multiplexer 702 is a device for implementing wavelength division multiplexing, wherein the optical signal to be detected enters the multiplexer 702 from the first signal receive terminal of the multiplexer 702, and the reference optical signal enters the multiplexer 702 from the second signal receive terminal of the multiplexer 702, such that the optical signal to be detected and the reference optical signal are multiplexed in the multiplexer 702.

The multiplexed signal is received by the photodiode 705 and converted to a current signal, which is amplified by the transimpedance amplifier 706 and converted to a voltage signal, then a portion of the voltage signal passes through a limiting amplifier 707 to filter out the low frequency reference optical signal, and the signal with the low frequency reference optical signal being filtered out is converted to digital signals RD+ and RD- with fixed swing, which are to be output to an upper computer. The other portion of the voltage signal enters the signal peak-to-peak value detection circuit 703. The current signal is greatly amplified after passing through the transimpedance amplifier 706, that is, the signal amplitude is large enough, so that splitting a small portion thereof for peak-to-peak value detection hardly causes interference to the original optical signal transmission system.

The voltage signal obtained from the output terminal of the transimpedance amplifier 706 is converted from the multiplexed signal of the optical signal to be detected and the reference optical signal, thus the voltage signal includes a component of the optical signal to be detected and a component of the reference optical signal. Therefore, after peak-to-peak value detection of the voltage signal by the signal peak-to-peak value detection circuit 703, the peak-to-peak value of the optical signal to be detected and the peak-to-peak value of the reference optical signal can be obtained. After the signal peak-to-peak value detection circuit 703 transmits the obtained peak-to-peak value of the optical signal to be detected and the peak-to-peak value of the reference optical signal to the processor 704, the processor 704 may determine, by using preset calculation method, the optical power of the optical signal to be detected according to the ratio of the peak-to-peak value of the optical signal to be detected to the peak-to-peak value of the reference optical signal.

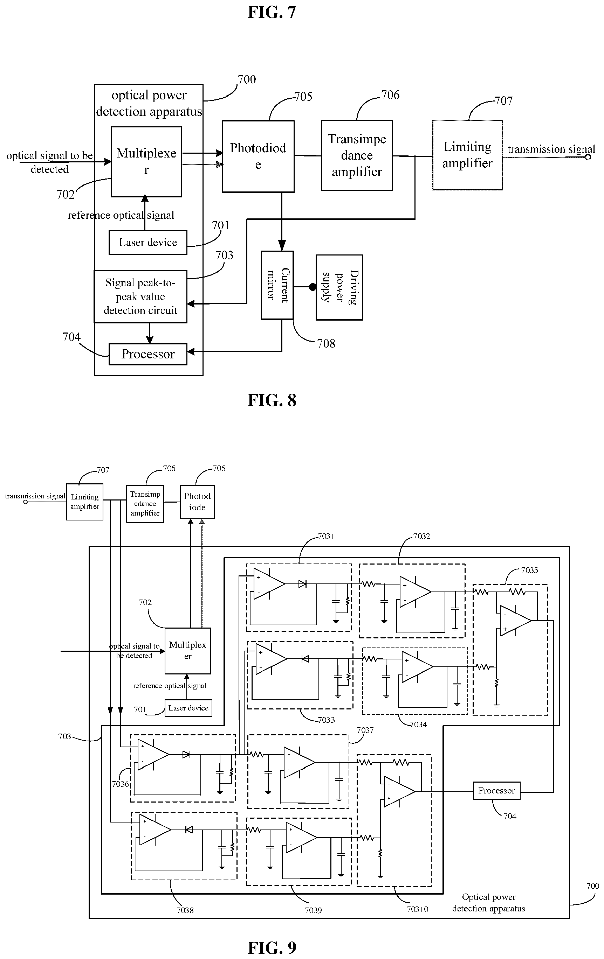

In an embodiment of the present disclosure, when a current mirror is included in the passive optical network, as shown in FIG. 8, an input terminal of the current mirror 708 is electrically connected to the photodiode 705, and an output of the current mirror 708 is electrically connected to the processor 704. In this case, the data received by the processor 704 includes the peak-to-peak value of the optical signal to be detected, the peak-to-peak value of the reference optical signal, and the signal value of the current mirror signal.

In addition, there is a functional relationship the ratio of the peak-to-peak value of the optical signal to be detected to the peak-to-peak value of the reference optical signal and the optical power of the optical signal to be detected, that is, $P=m*V+n$, wherein m and n are constants, P represents the optical power of the optical signal to be detected, and V represents the ratio of the peak-to-peak value of the optical signal to be detected to the peak-to-peak value of the reference optical signal. There is another functional relationship between the optical power of the optical signal to be detected and the signal value of the current mirror signal, that is, $P=k*Ipd+b$, wherein k and b are constants, P represents the optical power of the optical signal to be detected, and Ipd represents the signal value of the current mirror signal.

Therefore, when the peak-to-peak value of the optical signal to be detected and the peak-to-peak value of the reference optical signal are received, the processor 704 may obtain a first power value according to $P=m*V+n$; and when the signal value of the current mirror signal is received, the processor 704 may obtain a second power value according to $P = k*Ipd+b$. Then, which of the first power value and the second power value can be served as the optical power of the optical signal to be detected can be determined by a preset range. That is, when the second power value is outside the preset range, the second power value is served as the optical power of the optical signal to be detected; and when the second power value is within the preset range, the first power value is served as the optical power of the optical signal to be detected. Thereby, an optimal value for optical power detection can always be obtained.

In an embodiment, the signal peak-to-peak value detection circuit 703 includes a first detection circuit configured to detect the peak-to-peak value of the optical signal to be detected and a second detection circuit configured to detect the peak-to-peak value of the reference optical signal, wherein an input terminal of the first detection circuit is electrically connected to the output terminal of the transimpedance amplifier 706, and an input terminal of the second detection circuit is electrically connected to the first detection circuit, and an output terminal of the first detection circuit and an output terminal of the second detection circuit are both electrically connected to the processor 704.

Illustratively, as shown in FIG. 9, the first detection circuit includes: a first upper envelope peak detection circuit 7036, a first lower envelope peak detection circuit 7038, a first follower 7037, a second follower 7039, and a first subtractor 70310, wherein the first subtractor 70310 includes a first input terminal, a second input terminal, and a second signal output terminal.

An input terminal of the first upper envelope peak detection circuit 7036 is electrically connected to the output terminal of the transimpedance amplifier 706, an output terminal of the first upper envelope peak detection circuit 7036 is electrically connected to an input terminal of the first follower 7037, and an output terminal of the first follower 7037 is electrically connected to the first input terminal. An input terminal of the first lower envelope peak detection circuit 7038 is electrically connected to the output terminal of the transimpedance amplifier 706, an output terminal of the first lower envelope peak detection circuit 7038 is electrically connected to an input terminal of the second follower 7039, and an output terminal of the second follower 7039 is connected to the second input terminal. The second signal output terminal is electrically connected to the processor 704.

Illustratively, as shown in FIG. 9, the second detection circuit includes: a second upper envelope peak detection circuit 7031, a second lower envelope peak detection circuit 7033, a third follower 7032, a fourth follower 7034, and a second subtractor 7035, wherein the second subtractor 7035 includes a third input terminal, a fourth input terminal, and a third signal output terminal.

An input terminal of the second upper envelope peak detection circuit 7031 is electrically connected to the output terminal of the first upper envelope peak detection circuit 7036, an output terminal of the second upper envelope peak detection circuit 7031 is electrically connected to an input terminal of the third follower 7032, and an output terminal of the third follower 7032 is electrically connected to the third input terminal. An input terminal of the second lower envelope peak detection circuit 7033 is electrically connected to an output terminal of the first upper envelope peak detection circuit 7036, an output terminal of the second lower envelope peak detection circuit 7033 is electrically connected to an input terminal of the fourth follower 7034, and an output terminal of the fourth follower 7034 is electrically connected to the fourth input terminal. The third signal output terminal is electrically connected to the processor 704.

As shown in FIG. 9, the first upper envelope peak detection circuit 7036 and the first lower envelope peak detection circuit 7038 are both typical peak detection circuits using operational amplifiers, except that polarities of the diodes used in the two circuits are opposite, in order to detect an upper envelope peak and a lower envelope peak, respectively. Similarly, the second upper envelope peak detection circuit 7031 and the second lower envelope peak detection circuit 7033 are also typical peak detection circuit using operational amplifiers, except that polarities of the diodes used in the two circuits are opposite, in order to detect the upper envelope peak and the lower envelope peak, respectively.

The first follower 7037, the second follower 7039, the third follower 7032, and the fourth follower 7034 are typical follower circuits using operational amplifiers, and they can isolate lower stage circuits and increase the driving ability of the lower stage circuits.

The difference between the upper and lower envelope peaks of the optical signal to be detected, obtained by subtraction by the first subtractor 70310, is the peak-to-peak value A of the optical signal to be detected; similarly, the difference between the upper and lower envelope peaks of the reference optical signal, obtained by subtraction by the second subtractor 7035, is the peak-to-peak value B of the reference optical signal. The values A and B are respectively transmitted to the processor 704, so that the optical power of the optical signal to be detected is calculated by the processor 704 according to preset method.

Fourth embodiment

An embodiment of the present disclosure provides an optical module including the optical power detecting device in the foregoing embodiments, that is, the optical module includes a laser device 701, a multiplexer 702, a signal peak-to-peak value detection circuit 703, and a processor 704. The function of the processor 704 can be implemented by a control unit in the optical module.

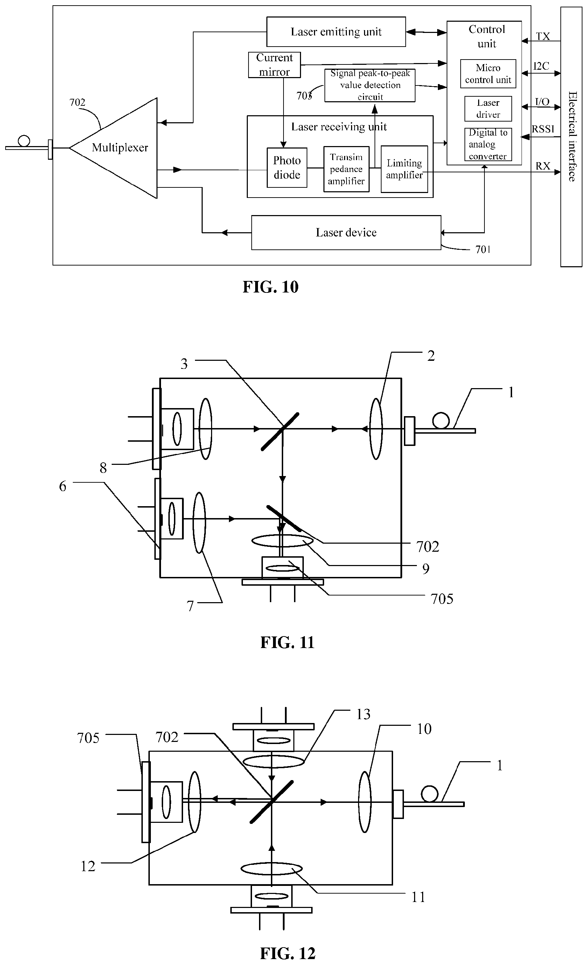

Illustratively, as shown in FIG. 10, the laser device 701 generates a reference optical signal that enters the multiplexer 702 and complexes with the optical signal to be detected. The multiplexer 702 outputs a multiplexed signal of the optical signal to be detected and the reference optical signal, which is applied to the photodiode in the laser receiving unit. The photodiode converts the multiplexed signal into a current signal that enters a transimpedance amplifier for amplification, and then a voltage signal is outputted. A portion of the voltage signal enters the signal peak-to-peak value detection circuit 703, and is detected by the signal peak-to-peak value detection circuit 703 to obtain a peak-to-peak value of the optical signal to be detected and a peak-to-peak value of the reference optical signal, in order to be provided to the control unit. In addition, a portion of the current signal outputted by the photodiode forms a mirror current through a current mirror, and a signal value of a current mirror signal output by the current mirror is transmitted to the control unit. The control unit obtains, by using a preset calculation method, the optical power of the optical signal to be detected according to the received peak-to-peak value of the optical signal to be detected, the peak-to-peak value of the reference optical signal, and the signal value of the current mirror signal.

In addition, the control unit shown in FIG. 10 includes a micro control unit (MCU), a laser driver (LDD), and a digital to analog converter (ADC). The ADC is configured for analog-to-digital conversion, the LDD is configured to provide driving for the laser emitting unit and a reference laser device, and the MCU is configured to calculate the optical power of the optical signal to be detected according to a predetermined program, and respond to transmission protocol (I2C) instructions, RSSI pulse (i.e., a time indication pulse for burst optical power detection), and I/O instructions proposed by the upper computer.

For uplink burst optical power reception, the upper channel provides an RSSI signal to the optical module, and the optical module records the optical power at the time corresponding to the RSSI pulse or returns it to the upper computer, thereby completing the burst signal optical power detection.

In addition, as shown in FIG. 11, the optical module of an embodiment of the present disclosure further includes: a first lens 2, a second lens 7, a third lens 9, and a first broadband filter 3. The optical signal to be detected is collected by the first lens 2, reflected by the first broadband filter 3 and then enters the multiplexer 702. The reference optical signal is focused by the second lens 7, and then enters the multiplexer 702. The multiplexed signal obtained by multiplexing the optical signal to be detected and the reference optical signal in the multiplexer 702 is focused by the third lens 9 and then applied to the photodiode 705.

The multiplexer 702 is actually a wideband filter. The actual working process of the optical part of the optical module shown in FIG. 11 is that: the optical signal to be detected enters the optical module through the optical fiber 1, and then is focused by the first lens 2, reflected to the multiplexer 702 at the first wideband filter 3, multiplexed in the multiplexer 702 with the reference optical signal which passes through the second lens 7 and has a different wavelength. The multiplexed optical signal enters the photodiode 705 through the third lens 9 in order to be converted to an electrical signal. The laser emitted by the laser emitting unit is focused by the seventh lens 8, and then enters the first broadband filter 3, after that, it is focused by the first lens 2 and then enters the optical fiber 1.

The first broadband filter 3 and the multiplexer 702 in FIG. 11 can be combined to obtain an optical part in the optical module as shown in FIG. 12. In this case, the optical module includes: a fourth lens 10, a fifth lens 13 and a sixth lens 12. The optical signal to be detected is collected by the fourth lens 10, and then enters the multiplexer 702. The reference optical signal is focused by the fifth lens 13, and then enters the multiplexer 702. The multiplexed signal obtained by multiplexing the optical signal to be detected and the reference optical signal in the multiplexer 702 is focused by the sixth lens 12 and then applied to the photodiode 705.

The actual working process of the optical part of the optical module shown in FIG. 12 is that: the optical signal to be detected enters the optical module through the optical fiber 1, and then is focused by the fourth lens 10, multiplexed in the multiplexer 702 with the reference optical signal which passes through the fifth lens 13 and has a different wavelength. The multiplexed optical signal enters the photodiode 705 through the sixth lens 12 in order to be converted to an electrical signal. The laser emitted by the laser emitting unit is focused by the eighth lens 11, and then enters the multiplexer for reflection, after that, it is focused by the fourth lens 10 and then enters the optical fiber 1.

The above is merely embodiments of the present disclosure. It should be noted that, those skilled in the art could make several improvements and modifications without departing from the scope of the present disclosure. These improvements and modifications are within the scope of the present disclosure.

**Industrial applicability**

According to the optical power detection method provided by embodiments of the present disclosure, a low-frequency amplitude-modulated reference optical signal is multiplexed with the optical signal to be detected, and applied to a same photodiode and other related electronic components in the passive optical network, and then, peak-to-peak value detection is performed on a voltage signal converted from the multiplexed signal to obtain the peak-to-peak value of the optical signal to be detected and the peak-to-peak value of the reference optical signal, thereby, the optical power of the optical signal to be detected can be obtained accurately according to a ratio of the peak-to-peak value of the optical signal to be detected to the peak-to-peak value of the reference optical signal.

**Claims**

1. An optical power detection method, applied to a passive optical network, comprising steps of:

   outputting a reference optical signal, wherein an amplitude modulation frequency of the reference optical signal is smaller than an amplitude modulation frequency of an optical signal to be detected, and a wavelength of the reference optical signal is different from a wavelength of the optical signal to be detected;
   applying a multiplexed signal of the optical signal to be detected and the reference optical signal to a photodiode of an optical module in the passive optical network;
   obtaining, from an output terminal of a transimpedance amplifier electrically connected to the photodiode in the passive optical network, a voltage signal converted from the multiplexed signal;
   performing peak-to-peak value detection on the voltage signal to obtain a peak-to-peak value of the reference optical signal and a peak-to-peak value of the optical signal to be detected; and
   obtaining a first power value of an optical power of the optical signal to be detected according to a ratio of the peak-to-peak value of the optical signal to be detected to the peak-to-peak value of the reference optical signal.

2. The method of claim 1, wherein the passive optical network further comprises a current mirror, and an input of the current mirror is electrically connected to the photodiode;
   after the step of obtaining the first power value of the optical power of the optical signal to be detected according to the ratio of the peak-to-peak value of the optical signal to be detected to the peak-to-peak value of the reference optical signal, the method further comprises:

   obtaining a signal value of a current mirror signal outputted from an output terminal of the current mirror;
   obtaining a second power value of the optical power of the optical signal to be detected according to the signal value of the current mirror signal;
   determining whether the second power value is outside a preset range;
   determining the second power value as the optical power of the optical signal to be detected if the second power value is outside the preset range; and

determining the first power value as the optical power of the optical signal to be detected if the second power value is within the preset range.

**3.** The method of claim 1, wherein the step of obtaining the first power value of the optical power of the optical signal to be detected according to the ratio of the peak-to-peak value of the optical signal to be detected to the peak-to-peak value of the reference optical signal comprises:

substituting the ratio of the peak-to-peak value of the optical signal to be detected to the peak-to-peak value of the reference optical signal into a first predetermined function $P=m*V+n$ to obtain the first power value, wherein P indicates the optical power of the optical signal to be detected, V indicates the ratio of the peak-to-peak value of the optical signal to be detected to the peak-to-peak value of the reference optical signal, and m and n are constants.

**4.** The method of claim 2, wherein the step of obtaining the second power value of the optical power of the optical signal to be detected according to the signal value of the current mirror signal comprises:

substituting the signal value of the current mirror signal into a second predetermined function $P=k*Ipd+b$ to obtain the second power value, wherein P indicates the optical power of the optical signal to be detected, Ipd indicates the signal value of the current mirror signal, and k and b are constants.

**5.** An optical power detection device, applied to a passive optical network, comprising:

an outputting module configured to output a reference optical signal, wherein an amplitude modulation frequency of the reference optical signal is smaller than an amplitude modulation frequency of an optical signal to be detected, and a wavelength of the reference optical signal is different from a wavelength of the optical signal to be detected;

a multiplexing module configured to apply a multiplexed signal of the optical signal to be detected and the reference optical signal to a photodiode of an optical module in the passive optical network;

a first obtaining module configured to obtain, from an output terminal of a transimpedance amplifier electrically connected to the photodiode in the passive optical network, a voltage signal converted from the multiplexed signal;

a detecting module configured to perform peak-to-peak value detection on the voltage signal to obtain a peak-to-peak value of the reference optical signal and a peak-to-peak value of the optical signal to be detected; and

a first calculating module configured to obtain a first power value of an optical power of the optical signal to be detected according to a ratio of the peak-to-peak value of the optical signal to be detected to the peak-to-peak value of the reference optical signal.

**6.** The device of claim 5, wherein the passive optical network further comprises a current mirror, and an input terminal of the current mirror is electrically connected to the photodiode;

the device further comprises:

a second obtaining module configured to obtain a signal value of a current mirror signal outputted from an output terminal of the current mirror;

a second calculating module configured to obtain a second power value of the optical power of the optical signal to be detected according to the signal value of the current mirror signal;

a determining module configured to determine whether the second power value is outside a preset range;

a first determining module configured to determine the second power value as the optical power of the optical signal to be detected if the second power value is outside the preset range; and

a second determining module configured to determine the first power value as the optical power of the optical signal to be detected if the second power value is within the preset range.

**7.** The device of claim 5, wherein the first computing module is configured to:

substitute the ratio of the peak-to-peak value of the optical signal to be detected to the peak-to-peak value of the reference optical signal into a first predetermined function $P=m*V+n$ to obtain the first power value, wherein P indicates the optical power of the optical signal to be detected, V indicates the ratio of the peak-to-peak value of the optical signal to be detected to the peak-to-peak value of the reference optical signal, and m and n are constants.

**8.** The device of claim 6, wherein the second calculating module is further configured to:

substitute the signal value of the current mirror signal into a second predetermined function $P=k*Ipd+b$ to obtain the second power value, wherein P indicates the optical power of the optical signal to be detected, Ipd indicates the signal value of the current mirror signal, and k and b are constants.

**9.** An optical power detection apparatus, applied to a passive optical network, comprising:

a laser device configured to output a reference optical signal, wherein an amplitude modulation frequency of the reference optical signal is smaller than an amplitude modulation frequency of an optical signal to be detected, and a wavelength of the reference optical signal is different from a wavelength of the optical signal to be detected;

a multiplexer comprising: a first signal output terminal, a first signal receive terminal configured to receive the optical signal to be detected, and a second signal receive terminal configured to receive the reference optical signal, wherein a multiplexed signal of the optical signal to be detected and the reference optical signal outputted from the first signal output terminal is applied to a photodiode of an optical module in the passive optical network;

a signal peak-to-peak value detection circuit configured to detect a peak-to-peak value of the optical signal to be detected and a peak-to-peak value of the reference optical signal, wherein an input terminal of the signal peak-to-peak value detection circuit is electrically connected to an output terminal of a transimpedance amplifier of the optical module; and

a processor configured to determine an optical power of the optical signal to be detected according to the peak-to-peak value of the optical signal to be detected and the peak-to-peak value of the reference optical signal, wherein the processor is electrically connected to an output terminal of the signal peak-to-peak value detection circuit.

10. The optical power detection apparatus of claim 9, further comprising: a current mirror, wherein an input terminal of the current mirror is electrically connected to the photodiode, and an output terminal of the current mirror is electrically connected to the processor.

11. The optical power detection apparatus of claim 9, wherein the signal peak-to-peak value detection circuit comprises a first detection circuit configured to detect the peak-to-peak value of the optical signal to be detected and a second detection circuit configured to detect the peak-to-peak value of the reference optical signal, wherein an input terminal of the first detection circuit is electrically connected to the output terminal of the transimpedance amplifier, and an input terminal of the second detection circuit is electrically connected to the first detection circuit, an output terminal of the first detection circuit and an output terminal of the second detection circuit are both electrically connected to the processor.

12. The optical power detection apparatus of claim 11, wherein the first detection circuit comprises: a first upper envelope peak detection circuit, a first lower envelope peak detection circuit, a first follower, a second follower and a first subtractor, wherein the first subtractor comprises a first input terminal, a second input terminal, and a second signal output terminal;

wherein an input terminal of the first upper envelope peak detection circuit is electrically connected to the output terminal of the transimpedance amplifier, an output terminal of the first upper envelope peak detection circuit is electrically connected to an input terminal of the first follower, and an output terminal of the first follower is electrically connected to the first input terminal;

an input terminal of the first lower envelope peak detection circuit is electrically connected to the output terminal of the transimpedance amplifier, an output terminal of the first lower envelope peak detection circuit is electrically connected to an input terminal of the second follower, and an output terminal of the second follower is connected to the second input terminal; and

the second signal output terminal is electrically connected to the processor.

13. The optical power detection apparatus of claim 12, wherein the second detection circuit comprises: a second upper envelope peak detection circuit, a second lower envelope peak detection circuit, a third follower, a fourth follower and a second subtractor, wherein the second subtractor comprises a third input terminal, a fourth input terminal, and a third signal output terminal;

wherein an input terminal of the second upper envelope peak detection circuit is electrically connected to the output terminal of the first upper envelope peak detection circuit, an output terminal of the second upper envelope peak detection circuit is electrically connected to an input terminal of the third follower, and an output terminal of the third follower is electrically connected to the third input terminal;

an input terminal of the second lower envelope peak detection circuit is electrically connected to the output terminal of the first upper envelope peak detection circuit, an output terminal of the second lower envelope peak detection circuit is electrically connected to an input terminal of the fourth follower, and an output terminal of the fourth follower is electrically connected to the fourth input terminal; and

the third signal output terminal is electrically connected to the processor.

14. An optical module, comprising the optical power detection apparatus according to any one of claims 9 to 13.

15. The optical module of claim 14, further comprising: a first lens, a second lens, a third lens, and a first broadband filter;

wherein the optical signal to be detected is collected by the first lens, reflected by the first broadband filter and then enters the multiplexer;
the reference optical signal is focused by the second lens, and then enters the multiplexer; and
a multiplexed signal obtained by multiplexing the optical signal to be detected and the reference optical signal in the multiplexer is focused by the third lens and then applied to the photodiode.

16. The light module of claim 14, further comprising: a fourth lens, a fifth lens, and a sixth lens;
wherein the optical signal to be detected is collected by the fourth lens, and then enters the multiplexer;
the reference optical signal is focused by the fifth lens, and then enters the multiplexer; and
a multiplexed signal obtained by multiplexing the optical signal to be detected and the reference optical signal in the multiplexer is focused by the sixth lens and then applied to the photodiode.

Driving power
supply

Current
mirror

Current-to-
voltage
converter

Micro
control
unit

Transimp
edance
amplifier

Limiting
amplifier

RD+

RD-

**FIG. 1**

| Output a reference optical signal | 201 |

| Apply a multiplexed signal of the optical signal to be detected and the reference optical signal to a photodiode of an optical module in the passive optical network | 202 |

| Obtain, from an output terminal of the transimpedance amplifier electrically connected to the photodiode in the passive optical network, a voltage signal converted from the multiplexed signal | 203 |

| Perform peak-to-peak value detection on the voltage signal to obtain a peak-to-peak value of the reference optical signal and a peak-to-peak value of the optical signal to be detected | 204 |

| Obtain a first power value of an optical power of the optical signal to be detected according to a ratio of the peak-to-peak value of the optical signal to be detected and the peak-to-peak value of the reference optical signal | 205 |

**FIG. 2**

the ratio V
of the peak-
to-peak value of the
optical
signal to be
detected to
the peak-to-
peak value
of the
reference
optical
signal

optical power P of the
optical signal to be
detected

**FIG. 3**

the    signal
value Ipd of
the    current
mirror signal

optical power P of
the optical signal to
be detected

**FIG. 4**

Optical power
detection device

500

501 — Outputting module

502 — Multiplexing module

503 — First obtaining module

504 — Detecting module

505 — First calculating module

**FIG. 5**

Optical power detection device ‑‑500

501 — Outputting module

502 — Multiplexing module

503 — First obtaining module

504 — Detecting module

505 — First calculating module

506 — Second obtaining module

507 — Second calculating module

508 — Determining module

509 — First determining module

510 — Second determining module

**FIG. 6**

Optical power detection apparatus ‑700

optical signal to be detected → Multiplexer ‑702

reference optical signal

Laser device ‑701

Signal peak-to-peak value detection circuit ‑703

Processor ‑704

Photodiode ‑705

Transimpedance amplifier ‑706

Limiting amplifier ‑707 → transmission signal

## FIG. 7

optical power detection apparatus — 700

optical signal to be detected → Multiplexer — 702

reference optical signal

Laser device — 701

Signal peak-to-peak value detection circuit — 703

704 — Processor

Photodiode — 705 → Transimpedance amplifier — 706 → Limiting amplifier — 707 → transmission signal

Current mirror → Driving power supply

703

708

## FIG. 8

transmission signal — Limiting amplifier — 707 → Transimpedance amplifier — 706 → Photodiode — 705

7031 7032 7035

optical signal to be detected → Multiplexer — 702

reference optical signal

Laser device — 701

703

7033 7034

7036 7037

Processor — 704

7038 7039 70310

Optical power detection apparatus — 700

## FIG. 9

FIG. 10

FIG. 11

FIG. 12

<table>
<tr><td colspan="2">**INTERNATIONAL SEARCH REPORT**</td><td>International application No.<br>**PCT/CN2017/087174**</td></tr>
</table>

**A. CLASSIFICATION OF SUBJECT MATTER**

H04B 10/077 (2013.01) i

According to International Patent Classification (IPC) or to both national classification and IPC

**B. FIELDS SEARCHED**

Minimum documentation searched (classification system followed by classification symbols)

H04B; H04L; H04Q

Documentation searched other than minimum documentation to the extent that such documents are included in the fields searched

Electronic data base consulted during the international search (name of data base and, where practicable, search terms used)

CNPAT, WPI, EPODOC, CNKI, GOOGLE: standard, monitor, drift, peak-to-peak value, referrence, fiducial, normal, optical, signal, detect, inspect, measure, coupler, mix, combin+, excursion, temperature, time, peak to peak, ratio, power

**C. DOCUMENTS CONSIDERED TO BE RELEVANT**

| Category* | Citation of document, with indication, where appropriate, of the relevant passages | Relevant to claim No. |
|---|---|---|
| A | CN 104467958 A (FINISAR CORP.), 25 March 2015 (25.03.2015), description, paragraphs [0006], [0021]-[0022] and [0050], and claims 1-2 | 1-16 |
| A | CN 105656548 A (ATOP CORPORATION), 08 June 2016 (08.06.2016), the whole document | 1-16 |
| A | CN 102130720 A (HUAWEI TECHNOLOGIES CO., LTD.), 20 July 2011 (20.07.2011), the whole document | 1-16 |
| A | CN 101217310 A (HUAWEI TECHNOLOGIES CO., LTD.), 09 July 2008 (09.07.2008), the whole document | 1-16 |
| A | KR 20030025694 A (SAMSUNG SDI CO., LTD.), 29 March 2003 (29.03.2003), the whole document | 1-16 |

☐ Further documents are listed in the continuation of Box C.     ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 12 July 2017 (12.07.2017) | **25 August 2017 (25.08.2017)** |

| Name and mailing address of the ISA/CN:<br>State Intellectual Property Office of the P. R. China<br>No. 6, Xitucheng Road, Jimenqiao<br>Haidian District, Beijing 100088, China<br>Facsimile No.: (86-10) 62019451 | Authorized officer<br><br>**CHEN, Jing**<br><br>Telephone No.: (86-10) **53318976** |

Form PCT/ISA/210 (second sheet) (July 2009)

## INTERNATIONAL SEARCH REPORT
### Information on patent family members

International application No.

**PCT/CN2017/087174**

| Patent Documents referred in the Report | Publication Date | Patent Family | Publication Date |
|---|---|---|---|
| CN 104467958 A | 25 March 2015 | US 2015086198 A1 | 26 March 2015 |
| CN 105656548 A | 08 June 2016 | None | |
| CN 102130720 A | 20 July 2011 | WO 2012071928 A1 | 07 June 2012 |
| | | US 2013259471 A1 | 03 October 2013 |
| | | EP 2634933 A1 | 04 September 2013 |
| CN 101217310 A | 09 July 2008 | None | |
| KR 20030025694 A | 29 March 2003 | CN 1411196 A | 16 April 2003 |
| | | US 2003066953 A1 | 10 April 2003 |

Form PCT/ISA/210 (patent family annex) (July 2009)